# EUROPÄISCHE PATENTSCHRIFT

(11) **EP 2 249 148 B1**
(45) Veröffentlichungstag und Bekanntmachung des Hinweises auf die Patenterteilung: **10.05.2023**
(21) Anmeldenummer: 10004103.7
(22) Anmeldetag: 17.04.2010
(51) Int. Cl.: G01N 21/954, G03B 37/00

(54) **Vorrichtung zum Abbilden der Innenfläche eines vorzugsweise zylindrischen Hohlraumes in einem Werkstück**
Device for reproducing the interior surface of a cavity in a preferably cylindrical workpiece
Dispositif de représentation imagée de la surface intérieure d'un espace creux de préférence cylindrique dans une pièce usinée

(30) Priorität: 05.05.2009 DE 202009006425 U
(43) Veröffentlichungstag der Anmeldung: 10.11.2010
(73) Patentinhaber: JENOPTIK Industrial Metrology Germany GmbH, 78056 Villingen-Schwenningen (DE)
(72) Erfinder: Keller, Hubert, 78464 Konstanz (DE); Rudolf, Michael, 78467 Konstanz (DE)
(74) Vertreter: Hoefer & Partner Patentanwälte mbB

(56) Entgegenhaltungen:
- EP-A1- 1 717 629
- EP-A2- 0 050 922
- US-A1- 2006 200 001

## Beschreibung

Die Erfindung betrifft eine Vorrichtung der im Oberbegriff des Anspruchs 1 genannten Art zum Abbilden der Innenfläche eines vorzugsweise zylindrischen Hohlraumes in einem Werkstück.

Das Abbilden einer Innenfläche eines zylindrischen Hohlraumes in einem Werkstück dient dem Ziel, die Oberfläche auf Fehler zu untersuchen und fehlerhafte Bauteile auszuscheiden. Dies ist insbesondere in der Automobilindustrie von Bedeutung, wo funktionsrelevante Bohrungen seriengefertigt werden, beispielsweise bei Bremszylindern, Bremssätteln, Pleueln, Kolben, Motorzylindern, Zylinderlaufbuchsen oder Lagerbuchsen.

Durch DE 10 2007 031 358 A1 ist eine Vorrichtung der betreffenden Art zum Abbilden der Innenfläche eines vorzugsweise zylindrischen Hohlraumes an einem Werkstück bekannt, die einen Grundkörper aufweist, in dem eine Optik zum Abbilden der Innenfläche angeordnet ist. Bei der aus der Druckschrift bekannten Vorrichtung weist die Optik einen Rundumblick von 360° auf und bildet die Innenfläche des Hohlraumes in dem Werkstück auf einem digitalen Bildaufnehmer ab. Um die gesamte relevante Innenfläche abzubilden, ist dem Grundkörper eine Vorschubeinrichtung zum Vorschub der Optik in Axialrichtung des Hohlraumes zugeordnet.

Durch US 2006/0200001 A1 ist ein Video-Untersuchungssystem zur Untersuchung von Werkstücken bekannt, das eine miniaturisierte Digitalkamera mit einer Optik aufweist. Die Optik ist im Inneren eines Rohrteiles angeordnet, in dem für den Durchblick der Optik ein Fenster aus Saphirglas angeordnet ist. Der so gebildete Untersuchungskopf ist mittels einer durchsichtigen Muffe gegen Beschädigung geschützt.

Durch EP 0 050 922 A2 ist eine Vorrichtung zur Untersuchung von Rohren bekannt, die einen Grundkörper aufweist, an dem eine Optik angeordnet ist. Die Optik blickt in Axialrichtung des Grundkörpers der

Vorrichtung, die die Axialrichtung des zu untersuchenden Rohres entspricht, nach vorne. Der Optik sind Kollisionsschutzmittel zum Schutz der Optik vor einer Kollision mit dem Werkstück zugeordnet, die elektromechanische Schutzmittel mit wenigstens einem mechanischen Schutzelement aufweisen. Bei der bekannten Vorrichtung sind klappenartige Schutzelemente vorgesehen, die in einer geschlossenen Position die Optik abdecken und in einer geöffneten Position einen Blick der Optik in Axialrichtung nach vorne ermöglichen. Die EP1717629 A1 befasst sich mit einer Objektiv-Schutzvorrichtung und Objektiveinheit.

Der Erfindung liegt die Aufgabe zugrunde, eine Vorrichtung der im Oberbegriff des Anspruchs 1 genannten Art anzugeben, deren Handhabung vereinfacht ist.

Diese Aufgabe wird durch die im Anspruch 1 angegebene Erfindung gelöst.

Der Grundgedanke der Erfindung besteht darin, eine Kollision der Optik mit dem Werkstück zu verhindern. Hierzu sieht die Erfindung vor, dass der Optik Kollisionsschutzmittel zum Schutz der Optik vor einer Kollision mit dem Werkstück zugeordnet sind. Auf diese Weise ist eine Beschädigung der Optik durch eine Kollision mit dem Werkstück zuverlässig vermieden. Dadurch entfallen zusätzliche von einer Bedienperson auszuführende Arbeitsschritte und Vorsichtsmaßnahmen, so dass die Handhabung der erfindungsgemäßen Vorrichtung vereinfacht ist.

Die Erfindung sieht vor, dass die Kollisionsschutzmittel mechanische oder elektro-mechanische Kollisionsschutzmittel mit wenigstens einem mechanischen Schutzelement aufweisen. Das Schutzelement ist zwischen einer ersten Position, in der die Optik für ein Abbilden der Innenfläche freigegeben ist, und einer zweiten Position, in der die Optik vor einer Kollision mit dem Werkstück geschützt ist, bewegbar.

Dem Schutzelement ist eine Antriebseinrichtung zum Bewegen des Schutzelementes wenigstens aus der zweiten Position in die erste Position zugeordnet.

Die Erfindung sieht ferner vor, dass die Kollisionsschutzmittel Kollisionsdetektionsmittel zur Detektion einer Kollision des Schutzelementes mit dem Werkstück aufweisen, die auf eine Relativbewegung des Schutzelementes zu der Optik ansprechen. Anhand einer Relativbewegung des Schutzelementes zu der Optik ist feststellbar, ob das Schutzelement mit dem Werkstück kollidiert. In diesem Falle kann beispielsweise eine dem Grundkörper zugeordnete Vorschubeinrichtung stillgesetzt werden, so dass eine weitere Bewegung der Optik vermieden ist. Die Vorrichtung kann dann mittels der Vorschubeinrichtung aus dem Hohlraum heraus und nach einer Neuausrichtung des Werkstücks relativ zu der Vorrichtung erneut in den Hohlraum hinein gefahren werden.

Um die Optik in Umfangsrichtung allseitig vor Kollisionsschäden zu schützen, ist es zweckmäßig, dass das Schutzelement nach Art einer Hülse ausgebildet ist, wie dies die Erfindung vorsieht.

Insbesondere dann, wenn das Schutzelement mittels eines Elektromagneten zwischen der ersten Position und der zweiten Position bewegt wird, ist es weiterhin zweckmäßig, dass die Hülse wenigstens abschnittsweise aus einem ferromagnetischen Material besteht.

Eine andere vorteilhafte Weiterbildung der Erfindung sieht Federmittel zum Vorspannen des Schutzelementes wenigstens in die zweite Position vor.

Um die Antriebseinrichtung besonders einfach zu gestalten, sieht eine vorteilhafte Weiterbildung der vorgenannten Ausführungsform vor, dass die Antriebseinrichtung wenigstens einen Elektromagneten zur Erzeugung einer Magnetkraft zum Bewegen des Schutzelementes wenigstens aus der zweiten Position in die erste Position aufweist.

Um die Kollisionsdetektionsmittel besonders einfach und kostengünstig zu gestalten, sieht eine Weiterbildung der vorgenannten Ausführungsform vor, dass die Kollisionsdetektionsmittel wenigstens einen Mikroschalter aufweisen. Geeignete Mikroschalter stehen als einfache und kostengünstige Standardbauteile zur Verfügung.

Zweckmäßigerweise ist dem Grundkörper eine Vorschubeinrichtung für einen Vorschub der Optik relativ zu dem Werkstück zugeordnet.

Eine vorteilhafte Weiterbildung der vorgenannten Ausführungsform sieht vor, dass die Kollisionsdetektionsmittel bei Detektion einer Kollision des Schutzelementes mit dem Werkstück die Vorschubeinrichtung stillsetzen. Auf diese Weise ist zuverlässig eine Kollision der Optik mit dem Werkstück vermieden.

Die Erfindung wird nachfolgend anhand der beigefügten stark schematisierten Zeichnung näher erläutert, in der ein Ausführungsbeispiel einer erfindungsgemäßen Vorrichtung dargestellt ist.

Es zeigt:
- Fig. 1: ein Ausführungsbeispiel einer erfindungsgemäßen Vorrichtung in Kombination mit einem Werkstück, das einen abzubildenden Hohlraum in Form einer Bohrung aufweist,
- Fig. 2: die Vorrichtung gemäß Fig. 1 in einer in die Bohrung eingefahrenen Position,
- Fig. 3: die Vorrichtung gemäß Fig. 1 beim Abbilden der Innenfläche der Bohrung,
- Fig. 4: die Vorrichtung gemäß Fig. 1 nach dem Abbilden der Bohrung,
- Fig. 5: die Vorrichtung gemäß Fig. 1 beim Einfahren in die Bohrung kurz vor einer Kollision mit einem Hindernis und
- Fig. 6: die Vorrichtung gemäß Fig. 1 nach einer Kollision mit dem Hindernis.

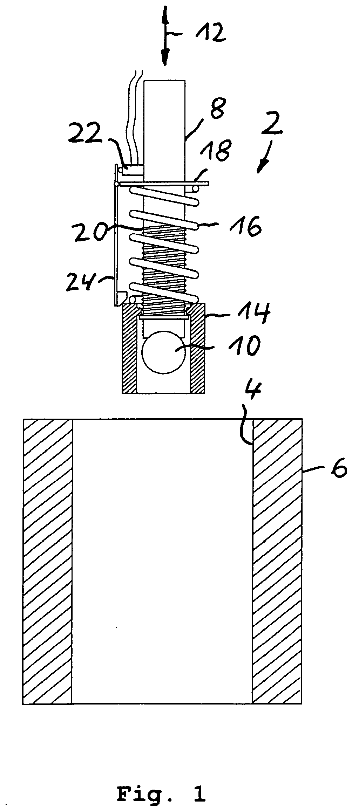

In Fig. 1 ist ein Ausführungsbeispiel einer erfindungsgemäßen Vorrichtung 2 zum Abbilden der Innenfläche 4 in einem Werkstück dargestellt. Die Innenfläche 4 ist bei diesem Ausführungsbeispiel durch eine Bohrung in dem Werkstück 6 gebildet.

Die Vorrichtung 2 weist einen Grundkörper auf, an dem eine Optik 10 zum Abbilden der Innenfläche 4 angeordnet ist. Bei der Optik 10 handelt es sich um eine Optik mit einem Rundumblick von 360°, so dass jeweils ein ringförmiger Bereich der Innenfläche 4 von der Optik 10 auf einen digitalen Bildaufnehmer (nicht dargestellt) abgebildet wird. Dem digitalen Bildaufnehmer ist eine Auswertungseinrichtung nachgeordnet, in der anhand der von der Optik 10 aufgenommenen Bilder mittels Algorithmen der Bildverarbeitung und Mustererkennung festgestellt wird, ob die Oberfläche der Bohrung in dem Werkstück 6 vorbestimmten Anforderungen genügt.

Um die Optik 10 in die Bohrung hinein- bzw. aus dieser herausfahren zu können, ist dem Grundkörper 8 eine Vorschubeinrichtung (nicht dargestellt) zugeordnet, mittels derer der Grundkörper 8 in Richtung eines Doppelpfeiles 12 relativ zu dem Werkstück 6 bewegbar ist. Hinsichtlich des Aufbaus der Vorrichtung 2 im übrigen und der Art und Weise, in der die Innenfläche 4 abgebildet und die dabei gewonnenen Bilder ausgewertet werden, wird auf die DE 10 2007 031 358 A1 und die WO 2009/003692 verwiesen.

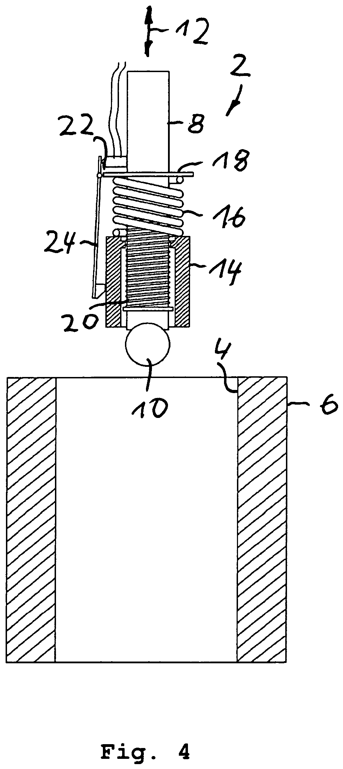

Erfindungsgemäß sind der Optik 10 Kollisionsschutzmittel zum Schutz der Optik vor einer Kollision mit dem Werkstück 6 zugeordnet, die mechanische oder elektro-mechanische Schutzmittel mit einem mechanischen Schutzelement aufweisen. Das Schutzelement ist bei dem dargestellten Ausführungsbeispiel nach Art einer Hülse 14 ausgebildet, die zwischen einer ersten Position, in der die Optik für eine Abbildung der Innenfläche 4 freigegeben ist, und einer zweiten Position, in der die Optik 10 vor einer Kollision mit dem Werkstück 6 geschützt ist, bewegbar ist. Fig. 1 zeigt die Hülse 14 in der zweiten Position, in der sie die Optik 10 in Umfangsrichtung allseits umgibt und somit bei einer Vorschubbewegung des Grundkörpers 8 relativ zu dem Werkstück 6 vor einer Kollision mit dem Werkstück 6 schützt. Die erste Position, in der die Optik 10 für eine Abbildung der Innenfläche 4 freigegeben ist, ist in Fig. 4 dargestellt; Fig. 4 wird weiter unten näher erläutert. Die Hülse 14 wie auch die weiteren Bauteile der Vorrichtung 2 sind in der Zeichnung rein schematisch dargestellt.

Zum Vorspannen der Hülse 14 in die in Fig. 1 dargestellte zweite Position sind Federmittel vorgesehen, die bei diesem Ausführungsbeispiel eine Schraubenfeder 16 aufweisen, die zwischen einem Flansch 18 des Grundkörpers 8 und der Hülse 14 angeordnet ist.

Zum Bewegen der Hülse 14 in die in Fig. 4 dargestellte erste Position ist der Hülse 14 eine Antriebseinrichtung zugeordnet, die bei diesem Ausführungsbeispiel wenigstens einen in der Zeichnung als Wicklung dargestellten Elektromagneten 20 aufweist, der gesteuert durch eine nicht dargestellte Steuerungseinrichtung eine Magnetkraft zum axialen Bewegen der bei diesem Ausführungsbeispiel aus ferromagnetischem Material bestehenden Hülse 14 in die erste Position aufweist.

Die Kollisionsschutzmittel weisen bei dem dargestellten Ausführungsbeispiel Kollisionsdetektionsmittel zur Detektion einer Kollision der Hülse 14 mit dem Werkstück 6 auf, wobei die Kollisionsdetektionsmittel auf eine Relativbewegung der Hülse 14 zu der Optik 10 ansprechen. Die Kollisionsdetektionsmittel weisen bei dem dargestellten Ausführungsbeispiel einen Mikroschalter 22 auf, der bei einer axialen Relativbewegung der Hülse 14 zu der Optik 10 in Fig. 1 nach oben über eine Wippe 24 betätigbar ist. Der Mikroschalter 22 steht mit einer nicht dargestellten Steuerungseinrichtung in Verbindung, die die Vorschubeinrichtung bei einem Ansprechen des Mikroschalters 22 stillsetzt.

Die Funktionsweise der erfindungsgemäßen Vorrichtung 2 ist wie folgt.

Vor einem Abbilden der Innenfläche 4 wird zunächst der Grundkörper 8 mittels der Vorschubeinrichtung vollständig in die Bohrung eingefahren, um festzustellen, ob sich ein Hindernis in der Bohrung befindet oder beispielsweise eine Fehlausrichtung des Werkstücks 6 zu einer Kollision mit dem Grundkörper 8 führen würde. Hierzu bewegt die Vorschubeinrichtung den Grundkörper 8 in Fig. 1 nach unten.

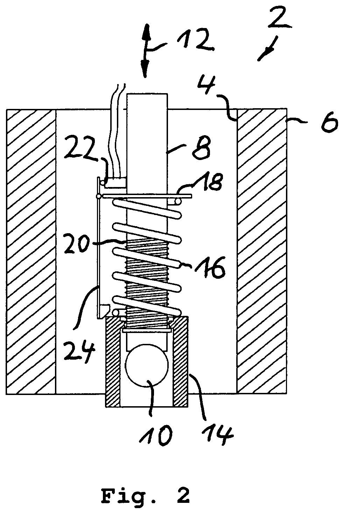

Fig. 2 stellt den Grundkörper 8 in einer vollständig in die Bohrung eingefahrenen Position dar.

Ist anhand des Einfahrens des Grundkörpers 8 in die Bohrung festgestellt worden, dass sich in der Bohrung kein Hindernis befindet und im Übrigen auch eine etwaige Fehlausrichtung des Werkstücks 6 nicht zu einer Kollision mit dem Grundkörper 8 geführt hat, so wird der Elektromagnet 20 betätigt, um die Hülse in die erste Position zu bewegen, in der die Optik 10 für ein Abbilden der Innenfläche 4 freigegeben ist.

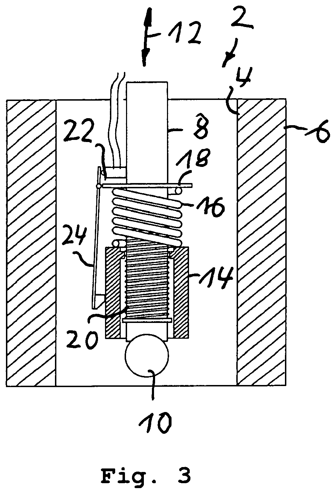

Fig. 3 stellt die Hülse 14 in der ersten Position dar, in der sie im Vergleich zu Fig. 2 in Fig. 2 bzw. Fig. 3 nach oben bewegt ist. Ist die Optik 10 für ein Abbilden der Innenfläche freigegeben, so steuert die Steuerungseinrichtung die Vorschubeinrichtung derart an, dass der Grundkörper 8 mit der Optik 10 in Fig. 3 nach oben bewegt wird. Während der Bewegung, die schrittweise oder kontinuierlich erfolgen kann, werden mittels der Optik 10 jeweils ringförmige Bereiche der Innenfläche 4 aufgenommen, bis die gesamte Innenfläche 4 abgebildet ist.

Fig. 4 zeigt den Grundkörper 8 nach dem Beenden der Abbildung. Anschließend wird der Elektromagnet 20 stromlos gesetzt, so dass die Hülse 14 aus der in Fig. 4 dargestellten ersten Position zurück in die in Fig. 1 dargestellte zweite Position bewegt wird, in der sie die Optik 10 umgibt und damit vor einer Kollision mit dem Werkstück 6 schützt.

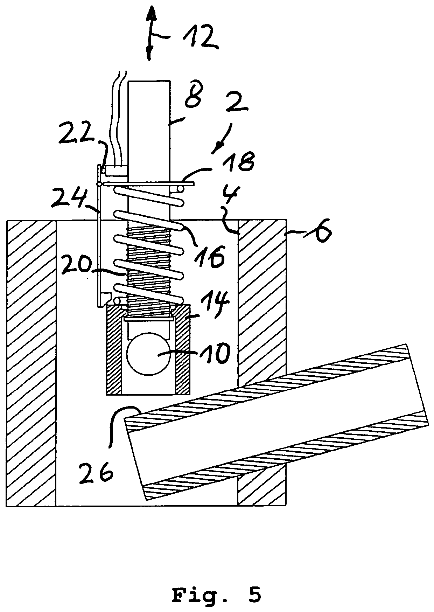

Fig. 5 stellt die Vorrichtung 2 beim Einfahren in die Bohrung eines weiteren Werkstücks 6 dar, wobei sich in der Bohrung des Werkstücks 6 ein schematisch dargestelltes Hindernis 26 befindet. Eine entsprechende Konstellation ergibt sich auch für den Fall, dass das Werkstück 6 relativ zu der Vorrichtung 2 durch Verkanten fehlausgerichtet ist. Die nachfolgenden Ausführungen gelten für diesen Fall entsprechend. Wird der Grundkörper 8 ausgehend von der in Fig. 5 dargestellten Position mittels der Vorschubeinrichtung weiter in Fig. 5 nach unten bewegt und damit weiter in die Bohrung eingefahren, so kollidiert die Hülse 14 mit dem Hindernis 26.

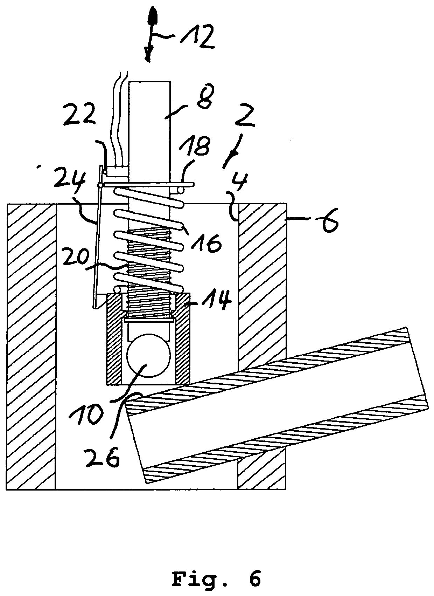

Wie in Fig. 6 dargestellt, wird bei einer weiteren Bewegung des Grundkörpers 8 in Fig. 6 nach unten die Hülse 14 relativ zu der Optik 10 axial in Fig. 6 nach oben verschoben, so dass über die Wippe 24 der Mikroschalter 22 betätigt wird. Aufgrund des Ansprechens des Mikroschalters 22 setzt die Steuerungseinrichtung die Vorschubeinrichtung still, so dass eine weitere Bewegung des Grundkörpers 8 in Fig. 6 nach unten, die zu einer Kollision der Optik 10 mit dem Hindernis 26 führen würde, zuverlässig vermieden ist.

Der Grundkörper 8 kann dann automatisch oder durch eine Bedienperson von Hand gesteuert aus der Bohrung herausgefahren werden, um zu prüfen, was zu einem Ansprechen der Kollisionsdetektionsmittel geführt hat. Nach dem Entfernen des Hindernisses 26 bzw. einem Neuausrichten des Werkstücks 6 kann dann der Vorgang erneut gestartet werden.

Aufgrund der erfindungsgemäßen Ausgestaltung der Vorrichtung 2 ist damit auf zuverlässige Weise eine Kollision der Optik 10 mit dem Werkstück und damit eine Beschädigung der Optik 10 zuverlässig vermieden.

## Patentansprüche

1. Vorrichtung zum Abbilden der Innenfläche eines vorzugsweise zylindrischen Hohlraumes in einem Werkstück,
mit einem Grundkörper, an dem eine Optik zum Abbilden der Innenfläche angeordnet ist,
wobei der Optik (10) Kollisionsschutzmittel zum Schutz der Optik (10) vor einer Kollision mit dem Werkstück (6) zugeordnet sind, die mechanische oder elektro-mechanische Schutzmittel mit wenigstens einem mechanischen Schutzelement aufweisen, das nach Art einer Hülse (14) ausgebildet ist,
wobei das Schutzelement zwischen einer ersten Position, in der die Optik (10) für ein Abbilden der Innenfläche (4) freigegeben ist, und einer zweiten Position, in der die Optik (10) vor einer Kollision mit dem Werkstück (6) geschützt ist, bewegbar ist,
wobei dem Schutzelement eine Antriebseinrichtung zum Bewegen des Schutzelementes wenigstens aus der zweiten Position in die erste Position zugeordnet ist und
wobei die Kollisionsschutzmittel Kollisionsdetektionsmittel zur Detektion einer Kollision des Schutzelementes mit dem Werkstück (6) aufweisen, die auf eine Relativbewegung des Schutzelementes zu der Optik (10) aus der zweiten Position in Richtung auf die erste Position ansprechen.

2. Vorrichtung nach einem der Anspruch 1, **dadurch gekennzeichnet, daß** die Hülse (14) wenigstens abschnittsweise aus einem ferromagnetischen Material besteht.

3. Vorrichtung nach einem der vorhergehenden Ansprüche, **dadurch gekennzeichnet, daß** die Kollisionsschutzmittel Federmittel zum Vorspannen des Schutzelementes wenigstens in die zweite Position aufweisen.

4. Vorrichtung nach Anspruch 1, **dadurch gekennzeichnet, daß** die Antriebseinrichtung wenigstens einen Elektromagneten (20) zur Erzeugung einer Magnetkraft zum Bewegen des Schutzelementes wenigstens aus der zweiten Position in die erste Position aufweist.

5. Vorrichtung nach Anspruch 1, **dadurch gekennzeichnet, daß** das Kollisionsdetektionsmittel wenigstens einen Mikroschalter (22) aufweisen.

6. Vorrichtung nach einem der vorhergehenden Ansprüche, **gekennzeichnet durch** eine Vorschubeinrichtung zum Vorschub des Grundkörpers (8) relativ zu dem Werkstück (6).

7. Vorrichtung nach Anspruch 6, **dadurch gekennzeichnet, daß** die Kollisionsdetektionsmittel die Vorschubeinrichtung bei Detektion einer Kollision des Schutzelementes mit dem Werkstück (6) stillsetzen.

## Claims

1. A device for imaging the inner surface of a preferably cylindrical cavity in a workpiece,
with a base body, at which an optics for imaging the inner surface is arranged,
wherein collision protection means for protecting the optics (10) against a collision with the workpiece (6) are associated with the optics (10), which comprise mechanical or electromechanical protection means with at least one mechanical protection element, which is designed in the manner of a sleeve (14),
wherein the protection element is movable between a first position, in which the optics (10) is exposed for imaging the inner surface (4), and a second position, in which the optics (10) is protected against a collision with the workpiece (6),
wherein a drive means is associated with the protection element for moving the protection element at least from the second position into the first position, and
wherein the collision protection means comprise collision detection means for detecting a collision of the protection element with the workpiece (6), which respond to a relative movement of the protection element to the optics (10) from the second position in direction towards the first position.

2. The device according to claim 1, **characterized in that** the sleeve (14) consists at least in sections of a ferromagnetic material.

3. The device according to any of the preceding claims, **characterized in that** the collision protection means comprise spring means for biasing the protection element at least into the second position.

4. The device according to claim 1, **characterized in that** the drive means comprises at least one electromagnet (20) for generating a magnetic force for moving the protection element at least from the second position into the first position.

5. The device according to claim 1, **characterised in that** the collision detection means comprise at least one microswitch (22).

6. The device according to any of the preceding claims, **characterized by** a feeding device for feeding the base body (8) relative to the workpiece (6).

7. The device according to claim 6, **characterized in that** the collision detection means stop the feeding device upon detection of a collision of the protection element with the workpiece (6).

## Revendications

1. Dispositif pour reproduire la surface intérieure d'une cavité de préférence cylindrique dans une pièce,
avec un corps de base, sur lequel une optique pour reproduire la surface intérieure est disposée,
dans lequel des moyens de protection contre une collision pour protéger l'optique (10) contre une collision avec la pièce (6) sont associés à l'optique (10), qui présentent des moyens de protection mécaniques ou électromécaniques avec au moins un élément de protection mécanique, qui est réalisé à la façon d'un manchon (14),
dans lequel l'élément de protection peut se déplacer entre une première position, dans laquelle l'optique (10) est libérée pour une reproduction de la surface intérieure (4), et une deuxième position, dans laquelle l'optique (10) est protégée contre une collision avec la pièce (6),
dans lequel un système d'entraînement pour déplacer l'élément de protection au moins à partir de la deuxième position dans la première position est associé à l'élément de protection et
dans lequel les moyens de protection contre une collision présentent des moyens de détection de collision pour la détection d'une collision de l'élément de protection avec la pièce (6), qui réagissent à un mouvement relatif de l'élément de protection vers l'optique (10) à partir de la deuxième position en direction de la première position.

2. Dispositif selon l'une quelconque des revendications 1, **caractérisé en ce que** le manchon (14) est constitué au moins sur certaines parties d'un matériau ferromagnétique.

3. Dispositif selon l'une quelconque des revendications précédentes, **caractérisé en ce que** les moyens de protection contre une collision présentent des moyens formant ressort pour précontraindre l'élément de protection au moins dans la deuxième position.

4. Dispositif selon la revendication 1, **caractérisé en ce que** le système d'entraînement présente au moins un électroaimant (20) pour produire une force magnétique pour déplacer l'élément de protection au moins à partir de la deuxième position dans la première position.

5. Dispositif selon la revendication 1, **caractérisé en ce que** les moyens de détection de collision présentent au moins un microrupteur (22).

6. Dispositif selon l'une quelconque des revendications précédentes, **caractérisé par** un système d'avance pour l'avance du corps de base (8) par rapport à la pièce (6).

7. Dispositif selon la revendication 6, **caractérisé en ce que** les moyens de détection de collision arrêtent le système d'avance lors de la détection d'une collision de l'élément de protection avec la pièce (6).
